## Europäisches Patentamt

### European Patent Office

### Office européen des brevets

(11) Veröffentlichungsnummer: **0 111 270**
**B1**

(12) # EUROPÄISCHE PATENTSCHRIFT

(45) Veröffentlichungstag der Patentschrift:
**19.03.86**

(51) Int. Cl.⁴: **E 06 B 9/10, B 60 J 1/20**

(21) Anmeldenummer: **83112116.5**

(22) Anmeldetag: **02.12.83**

(54) Rollovorhang.

(30) Priorität: **03.12.82 DE 3244880**

(43) Veröffentlichungstag der Anmeldung:
**20.06.84 Patentblatt 84/25**

(45) Bekanntmachung des Hinweises auf die Patenterteilung:
**19.03.86 Patentblatt 86/12**

(84) Benannte Vertragsstaaten:
**FR GB IT**

(56) Entgegenhaltungen:
**DE - B - 2 841 218**
**DE - C - 644 744**

(73) Patentinhaber: **Hüppe GmbH, Cloppenburger Strasse 200, D-2900 Oldenburg (DE)**

(72) Erfinder: **Lattek, Siegfried, Kurpfalzstrasse 26, D-6920 Sinsheim (DE)**

(74) Vertreter: **Eisenführ & Speiser, Martinistrasse 24, D-2800 Bremen 1 (DE)**

LIBER, STOCKHOLM 1986

## Beschreibung

Die Erfindung betrifft einen Rollovorhang für von der Rechteckform abweichende Fenster, mit einer Wickelwelle und einem flächigen Behang, der entlang einem Rand an der Wickelwelle befestigt ist.

Bei dieser herkömmlichen Ausgestaltung eines Rollovorhangs, dessen Wickelwelle im allgemeinen mit einem Federmotor zwecks Selbstaufrollung des Rollobehangs versehen ist, bereitet es Schwierigkeiten, Fenster abzudecken, deren Konfiguration vom Rechteck abweicht. Zwar ist es beispielsweise aus der DE-PS 644 744 oder der DE-PS 28 41 218 bekannt, konische Wickelwellen einzusetzen, um auf diese Weise unterschiedliche Behanglängen zu kompensieren, jedoch sind derartige Wellen teuer.

Der Erfindung liegt die Aufgabe zugrunde, dieselbe Wirkung auf einfachere Weise zu erreichen.

Diese Aufgabe wird erfindungsgemäß dadurch gelöst, daß ein im wesentlichen dreiecksförmiger, zum einen Ende der Wickelwelle hin spitz auslaufender End-Abschnitt des Behangs auf der Wickelwelle befestigt ist und deren wirksamen Wickelumfang zum anderen Ende der Wickelwelle hin zunehmend vergrößert. Auf diese Weise kann mit Hilfe einer zylindrischen Wickelwelle gleichwohl der Effekt einer konischen Welle erzielt werden, wobei durch entsprechende Bemessung des dreiecksförmigen, die Welle über ihre Länge stufenlos zunehmend verdickenden Behangabschnitts jede praktisch erforderliche und sinnvolle "Konizität' der Wickelwelle erzielt werden kann.

Je nach Fensterumriß, der insbesondere bei Pkw-Seitenscheiben sehr unterschiedlich ist, kann bei einem Behang, dessen an den befestigten Seitenrand angrenzende Seitenkanten Parallel zueinander verlaufen, vorteilhaft vorgesehen sein, daß im abgerollten Zustand des Behangs die Achse der Wickelwelle unter einem Winkel von unter 90° gegenüber derjenigen Seitenkante verläuft, die dem Wickelwellen-Ende mit größerem Umfang zugeordnet ist. Auf diese Weise wird der Verschwenkung entgegengewirkt, welcher der Behang infolge der "Konizität' der Wickelwelle beim Abrollen (und entsprechend beim Aufrollen) unterliegt.

Wenn in solchem Falle die Fenster-Konfiguration es zuläßt, ist es weiter vorteilhaft, die dem befestigten Seitenrand gegenüberliegende freie Seitenkante mit der dem Wickelwellen-Ende größeren Umfangs zugeordneten Seitenkante ebenfalls einen kleineren Winkel als 90° einschließen zu lassen. Denn dann erstreckt sich im aufgerollten Zustand die freie Seitenkante, die nach herkömmlicher Art beispielsweise durch einen Stab o. dgl. verstärkt sein kann, parallel zur Wickelwellen-Achse bzw. zum darauf befindlichen Behangwickel.

Die Praxis zeigt, daß die jeweiligen Winkelabweichungen nicht groß zu sein brauchen, um einerseits die gewünschten Effekte zu erzielen, andererseits den Rollovorhang den Gegebenheiten beispielsweise bei Pkw-Seitenscheiben optimal anzupassen. Abweichungen in der Größenordnung von 1° gegenüber der Rechtwinkligkeit reichen häufig bereits aus.

Die Zeichnung veranschaulicht die Erfindung an einem Ausführungsbeispiel. Darin zeigt:

Fig. 1 einen erfindungsgemäßen Rollovorhang vor der Befestigung des Behangs an der Wickelwelle;

Fig. 2 eine der Fig. 1 entsprechende Darstellung nach der Befestigung des Behangs an der Wickelwelle; und

Fig. 3 den Rollovorhang in aufgerolltem Zustand.

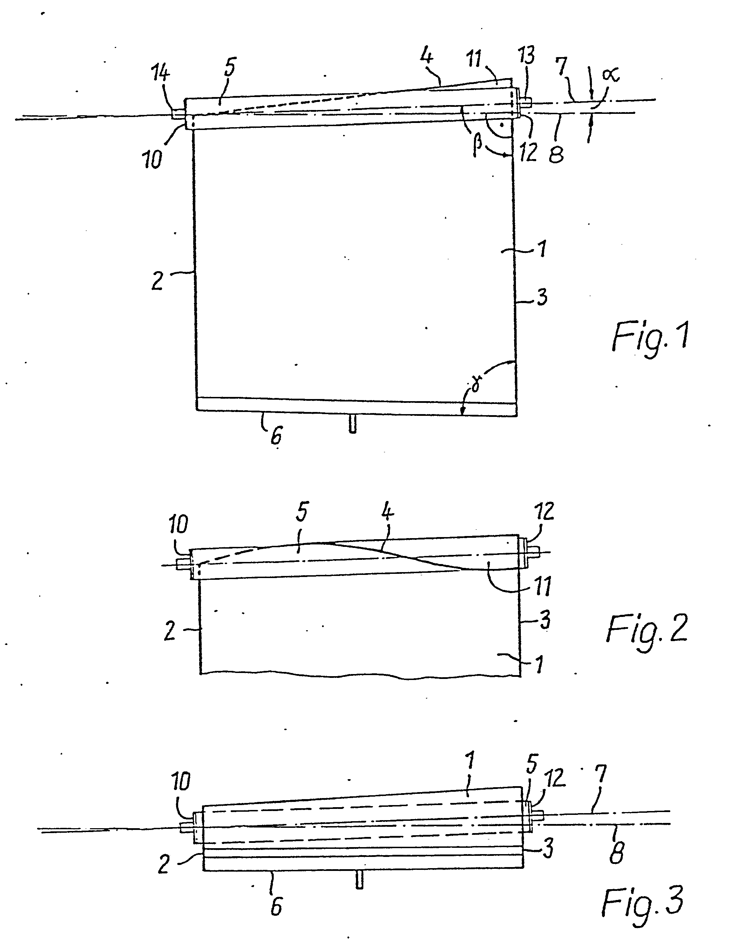

Wie Figur 1 deutlich zeigt, hat der Rollobehang 1 (aus Tuch, Folie o. dgl.) die Form eines ungleichschenkligen Trapezes mit parallelen Seitenkanten 2, 3, einer spitzwinklig zur Seitenkante 3 verlaufenden Seitenkante 4 im Bereich der Wickelwelle 5 und einer ebenfalls spitzwinklig (aber mit weniger von 90° abweichendem Winkel) zur Seitenkante 3 verlaufenden freien Seitenkante 6. Die Wickelwelle 5 ist derart auf den in Fig. 1 dargestellten Zuschnitt des Behangs 1 gelegt, daß ihre Berührungslinie 7 mit dem Behang 1 unter einem Winkel $\alpha$ von beispielsweise 1° zu einer Senkrechten 8 auf den Seitenkanten 2, 3 verläuft. Dabei schneiden sich die Berührungslinie 7 und die Senkrechte 8 an der Ecke 9 des Behangs 1 zwischen dessen Seitenkanten 2 und 4.

Die Berührungslinie 7, die Seitenkante 4 und der zwischen diesen beiden liegende Abschnitt der Seitenkante 3 begrenzen einen dreiecksförmigen, zum Ende 10 der Wickelwelle 5 spitz zulaufenden Abschnitt 11 des Behangs 1.

Dieser wird gemäß Fig. 2 auf der Wickelwelle 5 befestigt und vergrößert dadurch, vom Ende 10 zum anderen Ende 12 der Wickelwelle 5 hin zunehmend, deren wirksamen Umfang. Bei Drehung der Wickelwelle 5 (die einen nicht dargestellten Federmotor enthält und in üblicher Weise mit Hilfe eines Zapfens 13 und einer Zunge 14 beispielsweise oberhalb eines Pkw-Fensters gehalten ist) wird je Umdrehung ein wiederum trapezförmiger Abschnitt des Behangs 1 aufgewickelt, derart, daß im Bereich der Seitenkante 3 mehr Behang als im Bereich der Seitenkante 2 auf der Wickelwelle 5 aufgenommen wird.

Infolge der Befestigung der Wickelwelle 5 am Behang 1 unter dem Winkel $\beta$ ( = 90° - $\alpha$), den die Berührungslinie 7 und damit auch die Achse der Wickelwelle mit der Seitenkante 3 einschließt, sowie infolge des Winkels $\gamma$ zwischen der freien Seitenkante 6 und der Seitenkante 3, welcher ebenfalls kleiner ist als 90°, ergibt sich im aufgerollten Zustand des Behangs 1 der in Figur 3 dargestellte Zustand, in welchem die freie Kante 6 horizontal verläuft und sich praktisch senkrecht zu den von den Seitenkanten 2 und 3 gebildeten Seiten des Behangwickels auf der Wickelwelle 5 erstreckt.

## Patentansprüche

1. Rollovorhang für von der Rechtekform abweichende Fenster, mit einer Wickelwelle und einem flächigen Behang (1), der entlang einem Rand (4) an der Wickelwelle (5) befestigt ist, dadurch gekennzeichnet, daß ein im wesentlichen dreiecksförmiger, zum einen Ende (10) der Wickelwelle (5) hin spitz auslaufender End-Abschnitt (11) des Behangs (1) auf der Wickelwelle (5) befestigt ist und deren wirksamen Wickelumfang zum anderen Ende (12) der Wickelwelle (5) hin zunehmend vergrößert.

2. Rollovorhang nach Anspruch 1 mit einem Behang, dessen an den befestigten Rand (4) angrenzende Seitenkanten (2, 3) parallel zueinander verlaufen, dadurch gekennzeichnet, daß im abgerollten Zustand des Behangs (1) die Achse (7) der Wickelwelle (5) unter einem Winkel (β) von weniger als 90° gegenüber derjenigen Seitenkante (3) verläuft, die dem Wickelwellen-Ende (12) mit größerem Wickel-Umfang zugeordnet ist.

3. Rollovorhang nach Anspruch 2, dadurch gekennzeichnet, daß die dem befestigten Rand (4) gegenüberliegende freie Kante (6) mit der dem Wickelwellen-Ende (12) größeren Wickel-Umfangs zugeordneten Seitenkante (3) ebenfalls einen kleineren Winkel (γ) als 90° einschließt.

## Claims

1. A roller-blind for windows deviating from the rectangular shape, having a winding shaft and a flat drape (1) which is fastened along one edge (4) to the winding shaft (5), characterized in that an end portion (11) of the drape (1) of essentially triangular shape which terminates in a point towards one end (10) of the winding shaft (5) is fastened onto the winding shaft (5) and increases its effective winding circumference progresaively towards the other end (12) of the winding shaft (5).

2. A roller-blind as in Claim 1, having a drape the side edges (2, 3) of which, adjoining the fastened edge (4), run in parallel with one another, characterized in that in the unrolled state of the drape (1) the axis (7) of the winding shaft (5) runs at an angle (β) of lebs than 90° with respect to that side edge (3) which is associated with the end (12) of the winding shaft having the greater winding circumference.

3. A roller-blind as in Claim 2, characterized in that the free edge (6) lying opposite the fastened edge (4) includes with the side edge (3) associated with the end (12) of the winding shaft of greater winding circumference, likewise a smaller angle (γ) than 90°.

## Revendications

1. Store à enroulement pour des fenêtres s'écartant de la forme rectangularie, avec un arbre d'enroulement et une tenture plane (1) qui est fixée le long d'un bord (4) sur l'arbre d'enroulement (5), caractérisé en ce qu'une partie d'extrémité (11), essentiellement triangulaire, de la tenture (1), s'amincissant en pointe vers une extrémité (10) de l'arbre d'enroulement (5), est fixée sur l'arbre d'enroulement (5) et que son périmètre d'enroulement efficace augmente de façon croissante vers l'autre extrémité (12) de l'arbre d'enroulement (5).

2. Store à enroulement selon la revendication 1 avec une tenture dont les bords latéraux (2, 3) adjacents au bord fixé (4) s'étendent parallèlement entre eux, caractérisé en ce que dans l'état déroulé de la tenture (1), l'axe (7) de l'arbre d'enroulement (5) s'étend sous un angle (β) de moins de 90° par rapport au bord latéral (3) associé à l'extrémité (12) de plus grand périmètre d'enroulement de l'arbre d'enroulement.

3. Store à enroulement selon la revendication 2, caractérisé en ce que le bord libre (6) situé à l'opposé du bord fixé fait également un angle (γ) plus petit que 90° avec le bord latéral (3) associé à l'extrémité (12) de plus grand périmètre d'enroulement de l'arbre d'enroulement.

*Fig. 1*

*Fig. 2*

*Fig. 3*